# EUROPÄISCHE PATENTSCHRIFT

(11) **EP 1 147 933 B1**
(45) Veröffentlichungstag und Bekanntmachung des Hinweises auf die Patenterteilung: **28.02.2007**
(21) Anmeldenummer: 01108789.7
(22) Anmeldetag: 07.04.2001
(51) Int. Cl.: B60J 7/047, B60J 7/00

(54) **Fahrzeugdach mit einer Dachöffnung und zwei Deckeln**
Vehicle roof with an opening and two panels
Toit de véhicule avec une ouverture et deux panneaux

(30) Priorität: 19.04.2000 DE 10019677
(43) Veröffentlichungstag der Anmeldung: 24.10.2001
(73) Patentinhaber: Webasto Vehicle Systems International GmbH, 82131 Stockdorf (DE)
(72) Erfinder: Hirschvogel, Engelbert, 86928 Hofstetten (DE); Wingen, Bernhard, 83620 Feldkirchen (DE); Schwanitz, Günther, 82362 Weilheim (DE)
(74) Vertreter: Konnerth, Dieter Hans

(56) Entgegenhaltungen:
- EP-A- 0 368 404
- DE-A- 19 543 244
- DE-C- 19 538 552
- DE-C- 19 720 000

## Beschreibung

Die Erfindung betrifft ein Fahrzeugdach mit einer in einer festen Dachhaut ausgebildeten Dachöffnung, mit zwei transparenten, hintereinander angeordneten verstellbaren Deckeln zum Verschließen und zumindest teilweisen Freigeben der Dachöffnung, wobei die beiden Deckel mit angehobener Hinterkante in eine hintere Spoilerstellung verschiebbar sind, und mit einer unterhalb der Deckel angeordneten, ausfahrbaren Sonnenschutzeinrichtung.

Aus der DE 195 43 244 C2 ist ein derartiges Fahrzeugdach mit mehreren bewegbaren, transparenten Deckeln bekannt geworden, die eine Dachöffnung verschließen und zumindest teilweise freigeben können. Die Deckel sind zum vollständigen Öffnen der Dachöffnung in einer Spoilerstellung nach hinten übereinander fahrbar. Unterhalb zumindest einem der Deckel ist eine Sonnenschutzeinrichtung in Form eines Rollo am Fahrzeugdach vorgesehen, das unabhängig von der Verschiebebewegung des entsprechenden Deckels betätigbar ist. Unterhalb der Dachöffnung können auch zwei Rollos vorgesehen sein, um den Lichteinfall im vorderen Teil und im hinteren Teil der Dachöffnung individuell einstellen zu können. Damit kann zwar eine Abschattung der Dachöffnung eingestellt werden, nicht jedoch unmittelbar die Abschattung der einzelnen Deckel.

Aus der DE 195 38 552 C1 ist ein Sonnenschutz für ein Fahrzeugdach mit einem bewegbaren Deckel zum Verschließen oder Freigeben einer Dachöffnung bekannt geworden, bei der ein ausziehbares Rollo seitlich unterhalb des transparenten Deckels austauschbar gelagert ist. Die Sonnenschutzeinrichtung ist für ein Fahrzeugdach mit einem Deckel vorgesehen und verwirklicht eine lösbare Befestigung zum bedarfsweisen Austausch des Rollos.

Aufgabe der Erfindung ist es, ein eingangs genanntes Fahrzeugdach zu schaffen, das für die Passagiere im Fahrzeuginnenraum einen größeren Fahrkomfort ermöglicht.

Diese Aufgabe wird bei dem gattungsgemäßen Fahrzeugdach erfindungsgemäß dadurch gelöst, daß an jedem Deckel eine Sonnenschutzeinheit gelagert ist, die an dem jeweiligen Deckel verstellbar und mit dem jeweiligen Deckel bewegbar ist, und daß jeder Deckel in seiner Spoilerstellung von seiner ausfahrbaren Sonnenschutzeinheit zumindest teilweise abdeckbar ist. Somit kann wahlweise an jedem Deckel unabhängig vom anderen Deckel eine Sonnenschutzabdeckung im erforderlichen Ausmaß eingestellt werden. Durch die direkte Anbringung der beiden Sonnenschutzeinheiten an den jeweiligen Deckeln können diese auch in ausgefahrenen Zustand verfahren werden.

Vorteilhafte Ausgestaltungen der Erfindung sind in den Unteransprüchen angegeben.

Gemäß einer bevorzugten Ausgestaltung ist jede insbesondere als Rollo gebildete Sonnenschutzeinheit im Bereich des Vorderrandes ihres Deckels gelagert. Dann ist jeder Deckel in seiner Spoilerstellung von der ausfahrbaren Sonnenschutzeinheit durch einfache manuelle Bedienung zumindest teilweise abdeckbar. Jedoch kann auch eine motorische Betätigung vorgesehen sein.

Zweckmäßigerweise kann vorgesehen sein, daß das auszieh- oder ausfahrbare freie Ende der vorderen Sonnenschutzeinheit am Vorderrand des hinteren Dekkels anbringbar ist. Der Vorderrand bedeutet dabei den gesamten Bereich am Vorderrand des Deckels und im vorderen und unteren Abschnitt. In dieser Anordnung kann der vordere Deckel, dessen Sonnenschutzeinheit mit dem hinteren Deckel verbunden ist, in seiner Spoilerstellung verfahren werden. Die Sonnenschutzeinheit bewegt sich dabei mit und fährt ein oder aus.

Weiterhin kann vorgesehen sein, daß das auszieh- oder ausfahrbare freie Ende der hinteren Sonnenschutzeinheit am Hinterrand der Dachöffnung anbringbar ist. Damit läßt sich auch ein Spalt zwischen dem Hinterrand der Dachöffnung und dem hinteren Deckel verschließen. Dann kann der hintere Deckel mit seiner mit dem Hinterrand der Dachöffnung verbundenen Sonnenschutzeinheit in seiner Spoilerstellung verfahren werden. Die Sonnenschutzeinheit verstellt sich dementsprechend.

Bevorzugt enthält jeder Deckel ein randseitiges Deckelinnenblech, an dem die Sonnenschutzeinheit angebracht ist.

Die Sonnenschutzeinheiten können Rollos, Jalousien oder lamellenartige Abdekkungen sein.

In Abhängigkeit von dem gewünschten Abschattungsgrad kann das Rollomaterial transparent, gelocht oder undurchsichtig sein.

Nachfolgend wird ein Ausführungsbeispiel des Fahrzeugdaches unter Bezugnahme auf Zeichnungen näher erläutert. Es zeigt:
- Fig. 1: in einem Längsschnitt in schematischer Darstellung ein Fahrzeugdach mit einer von zwei bewegbaren Deckeln verschlossenen Dachöffnung und an den Deckeln angebrachten Sonnenschutzeinheiten;
- Fig. 2: in einem Längsschnitt das Fahrzeugdach mit nach hinten verschobenen Deckeln; und
- Fig. 3: in einem Längsschnitt das Fahrzeugdach mit nach hinten verschobenen Deckeln und unterschiedlich ausgefahrenen Sonnenschutzeinrichtungen.

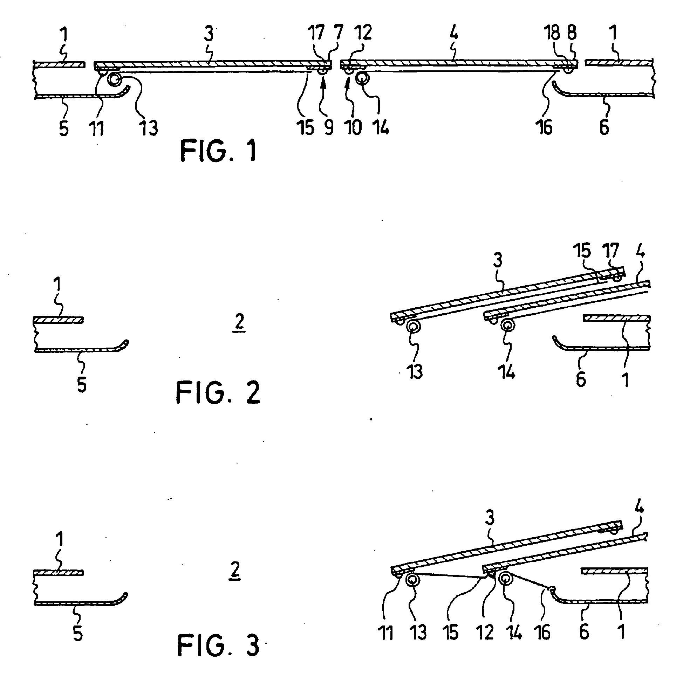

Ein Fahrzeugdach eines Personenkraftwagens mit einer festen Dachhaut 1 enthält eine Dachöffnung 2, die mit zwei an Führungen (nicht dargestellt) hintereinander angeordneten und zu öffnenden Deckeln 3 und 4 schließbar ist. Zum Fahrzeuginnenraum hin ist die Dachöffnung 2 von einem vorderen Himmelteil 5 und einem hinteren Himmelteil 6 begrenzt. Jeder Deckel 3, 4 ist an seinem Hinterrand 7 bzw. 8 anhebbar oder hochschwenkbar. Der hintere Deckel 4 kann in seiner hochgeschwenkten Spoilerstellung entlang den Führungen nach hinten über die Dachhaut 1 verfahren werden (siehe Fig. 2). Der vordere Deckel 3 kann in seiner hochgeschwenkten Spoilerstellung entlang den Führungen über den hinteren Deckel 4 in dessen Schließstellung in der Dachöffnung 2 oder in dessen hochgeschwenkter Spoilerstellung (siehe Fig. 2) verfahren werden.

Die Deckel 3, 4 sind als Glasdeckel gebildet und enthalten ein unterseitig angebrachtes Deckelinnenblech 9 bzw. 10, das als umlaufendes randseitiges Profil gestaltet ist. Jeder Deckel 3, 4 enthält eine Sonnenschutzeinheit 13 bzw. 14, die im Ausführungsbeispiel ein Rollo ist und die an einem Vorderabschnitt 11 bzw. 12 des jeweiligen Deckelinnenblechs 9 bzw. 10 angebracht ist. Jedes Rollo 13, 14 kann aus seiner aufgewickelten Schließstellung durch Ausziehen an seinem freien Ende 15 bzw. 16 geöffnet werden. Das freie Ende 15 bzw. 16 wird bis zu einem Hinterabschnitt 17 bzw. 18 des Deckelinnenblechs 9 bzw. 10 gezogen und daran befestigt, so daß jeder Deckel 3, 4 von innen vollständig abgedeckt werden kann. Jedoch können auch Zwischenstellungen eingestellt werden, indem seitliche Zapfen am vorderen freien Ende 15 bzw. 16 in entsprechenden Arretierungen an den sich gegenüberliegenden Seitenabschnitten der Deckelinnenbleche 9 bzw. 10 festgelegt werden. Die Sonnenschutzeinheiten oder Rollos 13, 14 können wahlweise diese unterschiedlichen Stellungen einnehmen, wenn einer oder beide Deckel 3, 4 in der oben beschriebenen Weise verfahren werden. Fig. 2 zeigt die geöffnete Dachöffnung 2 mit nach hinten verfahrenen Deckeln 3, 4 und an den Deckeln 3, 4 geöffneten Rollos 13 bzw. 14.

Fig. 3 zeigt eine abgewandelte Funktionsweise der beiden Sonnenschutzeinheiten oder Rollos 13, 14. Das freie Ende 16 des hinteren Rollos 14 ist an dem hinteren Himmelteil 6 eingehakt oder festgelegt und das freie Ende 15 des vorderen Rollos 13 ist im Bereich des Vorderrandes des hinteren Deckels 14, beispielsweise an dem Vorderabschnitt 12 des Deckelinnenblechs 10 des hinteren Deckels 14, eingehakt oder festgelegt. Somit besteht eine kontinuierliche Sonnenschutzabdeckung vom hinteren Himmelteil 6 bis zur Vorderkante des vorderen Deckels 3 bzw. zum Vorderabschnitt 11 des Deckelinnenblechs 9. Diese kontinuierliche Sonnenschutzabdeckung bleibt auch bei einem Verschieben des vorderen Dekkels 3 erhalten, da sich dann der vordere Rollo 13 weiter abwickelt und öffnet, wenn sich der Abstand vom vorderen Deckel 3 zum hinteren Deckel 4 vergrößert. Bei ausreichender Länge des Rollos 13 kann der vordere Deckel 3 bis in seine Schließstellung in der Dachöffnung (siehe Fig. 1) verfahren werden, wobei sich der Rollo 13 noch bis zum hinteren Deckel 4, der noch in seiner Spoilerstellung ist, erstrecken kann. Gleichermaßen kann der hintere Deckel 4 verfahren werden, wobei dann einerseits der hintere Rollo 14 ausgezogen wird und der vordere Rollo 13 sich wieder entsprechend aufwickelt.

Eine Sonnenschutzabdeckung kann auch in der Weise hergestellt werden, daß einer der Rollos 13 oder 14 an seinem Deckel 3 bzw. 4 in eine Ganz- oder Teilschließstellung gebracht wird, während der andere Rollo 14 oder 13 am hinteren Himmelteil 6 bzw. am hinteren Deckel 4 befestigt wird, wie voranstehend beschrieben ist.

Die Sonnenschutzeinrichtungen oder Rollos 13, 14 können manuell betätigt werden, beispielsweise gegen eine Wickelfeder der Rollos abgewickelt und an den jeweiligen Befestigungspunkten festgelegt werden, oder sie können durch (nicht dargestellte) Antriebseinrichtungen aus- und eingefahren werden.

In dem beschriebenen Ausführungsbeispiel sind als Sonnenschutzeinrichtungen insbesondere Rollos 13 und 14 vorgesehen. Jedoch können statt ausziehbarer Rollos mit einer kontinuierlichen Plane auch Jalousien, lamellenartige Sonnenschutzelemente oder dergleichen verwendet werden.

Die Deckel 3, 4 können auch aus transparentem Kunststoff hergestellt sein.

### Bezugszeichenliste

- 1: Dachhaut
- 2: Dachöffnung
- 3: Deckel
- 4: Deckel
- 5: vorderes Himmelteil
- 6: hinteres Himmelteil
- 7: Hinterrand
- 8: Hinterrand
- 9: Deckelinnenblech
- 10: Deckelinnenblech
- 11: Vorderabschnitt
- 12: Vorderabschnitt
- 13: Sonnenschutzeinheit
- 14: Sonnenschutzeinheit
- 15: freies Ende
- 16: freies Ende
- 17: Hinterabschnitt
- 18: Hinterabschnitt

## Patentansprüche

1. Fahrzeugdach mit einer in einer festen Dachhaut (1) ausgebildeten Dachöffnung (2), mit zwei transparenten, hintereinander angeordneten verstellbaren Deckeln (3, 4) zum Verschließen und zumindest teilweisen Freigeben der Dachöffnung (2), wobei die beiden Deckel (3, 4) mit angehobener Hinterkante (7, 8) in eine hintere Spoilerstellung verschiebbar sind, und mit einer unterhalb der Deckel (3, 4) angeordneten, ausfahrbaren Sonnenschutzeinrichtung,
**dadurch gekennzeichnet,**
**daß** an jedem Deckel (3, 4) eine Sonnenschutzeinheit (13, 14) gelagert ist, die an dem jeweiligen Deckel (3 bzw. 4) verstellbar und mit dem jeweiligen Deckel (3 bzw. 4) bewegbar ist, und daß jeder Deckel (3, 4) in seiner Spoilerstellung von seiner ausfahrbaren Sonnenschutzeinheit (13, 14) zumindest teilweise abdeckbar ist.

2. Fahrzeugdach nach Anspruch 1,
**dadurch gekennzeichnet, daß** jede Sonnenschutzeinheit (13, 14) aus einer Offenstellung im Bereich des Vorderrandes (11, 12) ihres Deckels (3, 4) in Richtung zum jeweiligen Hinterrand (7 bzw. 8) ausfahrbar ist.

3. Fahrzeugdach nach Anspruch 1 oder 2,
**dadurch gekennzeichnet, daß** das auszieh- oder ausfahrbare freie Ende (15) der vorderen Sonnenschutzeinheit (13) am Vorderrand (12) des hinteren Deckels (4) anbringbar ist.

4. Fahrzeugdach nach Anspruch 3,
**dadurch gekennzeichnet, daß** der vordere Deckel (3) mit seiner mit dem hinteren Deckel (4) verbundenen Sonnenschutzeinheit (14) in seiner Spoilerstellung verfahrbar ist.

5. Fahrzeugdach nach einem der Ansprüche 1 bis 4,
**dadurch gekennzeichnet, daß** das auszieh- oder ausfahrbare freie Ende (16) der hinteren Sonnenschutzeinheit (14) am Hinterrand (6) der Dachöffnung (2) anbringbar ist.

6. Fahrzeugdach nach Anspruch 5,
**dadurch gekennzeichnet, daß** der hintere Deckel (4) mit seiner mit dem Hinterrand (6) der Dachöffnung (2) verbundenen Sonnenschutzeinheit (14) in seiner Spoilerstellung verfahrbar ist.

7. Fahrzeugdach nach einem der Ansprüche 1 bis 6,
**dadurch gekennzeichnet, daß** jeder Deckel (3, 4) ein randseitiges Deckelinnenblech (9, 11 bzw. 10, 12) aufweist, an dem die Sonnenschutzeinheit (13 bzw. 14) angebracht ist.

8. Fahrzeugdach nach einem der Ansprüche 1 bis 7,
**dadurch gekennzeichnet, daß** die Sonnenschutzeinheiten (13, 14) Rollos (13, 14) oder Jalousien sind.

9. Fahrzeugdach nach Anspruch 8,
**dadurch gekennzeichnet, daß** das Rollomaterial transparent, gelocht oder undurchsichtig ist.

10. Fahrzeugdach nach Anspruch 8 oder 9,
**dadurch gekennzeichnet, daß** das Rollo (13, 14) an der Unterseite des Deckels (3, 4) im Bereich des jeweiligen Vorderrandes (11 bzw. 12) gelagert ist.

## Claims

1. Vehicle roof having a roof opening (2) formed in a fixed roof skin (1), having two transparent adjustable covers (3, 4) arranged one behind the other for closing and at least partially opening the roof opening (2), the two covers (3, 4), with the rear edge (7, 8) raised, being displaceable into a rear spoiler position, and having an extendible sunshade device located underneath the covers (3, 4),
**characterised in that** a sunshade unit (13, 14) is mounted on each cover (3, 4), the sunshade unit being adjustable on the respective cover (3 and 4) and movable with the respective cover (3 and 4), and **in that** each cover (3, 4) can be at least partially covered, in its spoiler position, by its extendible sunshade unit (13, 14).

2. Vehicle roof according to Claim 1, **characterised in that** each sunshade unit (13, 14) is extendible from an open position in the region of the front edge (11, 12) of its cover (3, 4) towards the respective rear edge (7 and 8).

3. Vehicle roof according to Claim 1 or 2, **characterised in that** the extendible free end (15) of the front sunshade unit (13) is attachable to the front edge (12) of the rear cover (4).

4. Vehicle roof according to Claim 3, **characterised in that** the front cover (3) is movable, in its spoiler position, with its sunshade unit (14) connected to the rear cover (4).

5. Vehicle roof according to one of Claims 1 to 4, **characterised in that** the extendible free end (16) of the rear sunshade unit (14) is attachable to the rear edge (6) of the roof opening (2).

6. Vehicle roof according to Claim 5, **characterised in that** the rear cover (4) is movable, in its spoiler position, with its sunshade unit (14) connected to the rear edge (6) of the roof opening (2).

7. Vehicle roof according to one of Claims 1 to 6, **characterised in that** each cover (3, 4) has a marginal cover inner metal plate (9, 11 and 10, 12, respectively), to which the sunshade unit (13 and 14, respectively) is attached.

8. Vehicle roof according to one of Claims 1 to 7, **characterised in that** the sunshade units (13, 14) are roller blinds (13, 14) or venetian blinds.

9. Vehicle roof according to Claim 8, **characterised in that** the roller-blind material is transparent, perforated or opaque.

10. Vehicle roof according to Claim 8 or 9, **characterised in that** the roller blind (13, 14) is mounted on the bottom side of the cover (3, 4) in the region of the respective front edge (11 and 12).

## Revendications

1. Toit de véhicule avec une ouverture de toit (2) formée dans une couverture de toit fixe (1), avec deux panneaux transparents réglables (3, 4) disposés l'un à la suite de l'autre pour fermer et dégager au moins partiellement l'ouverture de toit (2), les deux panneaux (3, 4) pouvant être déplacés en translation avec le bord arrière relevé (7, 8) dans une position arrière de déflecteur, et avec un équipement pare-soleil déployable disposé en dessous des panneaux (3, 4),
**caractérisé en ce qu'**une unité pare-soleil (13, 14) est montée sur chaque panneau (3, 4), unité qui peut être réglée sur le panneau respectif (3 ou 4) et qui peut être déplacée avec le panneau respectif (3 ou 4), et **en ce que** chaque panneau (3, 4) peut, dans sa position de déflecteur, être recouvert au moins partiellement par son unité pare-soleil déployable (13, 14).

2. Toit de véhicule selon la revendication 1, **caractérisé en ce que** chaque unité pare-soleil (13, 14) peut être déployée, à partir d'une position ouverte dans la région du bord avant (11, 12) de son panneau (3, 4), en direction du bord arrière respectif (7 ou 8).

3. Toit de véhicule selon la revendication 1 ou 2, **caractérisé en ce que** l'extrémité libre télescopique ou déployable (15) de l'unité pare-soleil avant (13) peut être fixée sur le bord avant (12) du panneau arrière (4).

4. Toit de véhicule selon la revendication 3, **caractérisé en ce que** le panneau avant (3) peut être déplacé dans sa position de déflecteur avec son unité pare-soleil (14) reliée au panneau arrière (4).

5. Toit de véhicule selon l'une des revendications 1 à 4, **caractérisé en ce que** l'extrémité libre télescopique ou déployable (16) de l'unité pare-soleil arrière (14) peut être fixée sur le bord arrière (6) de l'ouverture de toit (2).

6. Toit de véhicule selon la revendication 5, **caractérisé en ce que** le panneau arrière (4) peut être déplacé dans sa position de déflecteur avec son unité pare-soleil (14) reliée au bord arrière (6) de l'ouverture de toit (2).

7. Toit de véhicule selon l'une des revendications 1 à 6, **caractérisé en ce que** chaque panneau (3, 4) présente une tôle intérieure marginale de panneau (9, 11 ou 10, 12) sur laquelle est fixée l'unité pare-soleil (13 ou 14).

8. Toit de véhicule selon l'une des revendications 1 à 7, **caractérisé en ce que** les unités pare-soleil (13, 14) sont des stores (13, 14) ou des jalousies.

9. Toit de véhicule selon la revendication 8, **caractérisé en ce que** le matériau du store est transparent, ajouré ou opaque.

10. Toit de véhicule selon la revendication 8 ou 9, **caractérisé en ce que** le store (13, 14) est monté sur le dessous du panneau (3, 4) dans la région du bord avant respectif (11 ou 12).
